(19) Europäisches Patentamt
European Patent Office
Office européen des brevets

(11) **EP 4 300 092 B1**

(12) **FASCICULE DE BREVET EUROPÉEN**

(45) Date de publication et mention
de la délivrance du brevet:
**12.03.2025 Bulletin 2025/11**

(21) Numéro de dépôt: **23181688.5**

(22) Date de dépôt: **27.06.2023**

(51) Classification Internationale des Brevets (IPC):
**G01N 27/85** (2006.01) **G01N 27/87** (2006.01)
**G01V 3/08** (2006.01) **G01V 3/10** (2006.01)

(52) Classification Coopérative des Brevets (CPC):
**G01N 27/87; G01N 27/85; G01V 3/081;
G01V 3/087; G01V 3/10**

(54) **PROCÉDÉ ET DISPOSITIF D'INSPECTION D'UN TRONÇON DE CANALISATION**

VERFAHREN UND VORRICHTUNG ZUR INSPEKTION EINES ROHRLEITUNGSABSCHNITTS

METHOD AND DEVICE FOR INSPECTING A PIPE SECTION

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **28.06.2022 FR 2206475**

(43) Date de publication de la demande:
**03.01.2024 Bulletin 2024/01**

(73) Titulaire: **Luling Tech
75019 Paris (FR)**

(72) Inventeur: **LÜLING, Martin Gordon
75019 PARIS (FR)**

(74) Mandataire: **Cabinet Boettcher et al
5, rue de Vienne
75008 Paris (FR)**

(56) Documents cités:
**EP-A1- 3 910 327     WO-A1-2019/083923
FR-A1- 2 354 589     US-A1- 2019 064 114**

**Description**

La présente invention concerne l'inspection de canalisations, et plus particulièrement le contrôle de l'intégrité de pipelines enfouis dans le sol.

ARRIERE PLAN DE L'INVENTION

Formés de tronçons de canalisations soudés les uns aux autres, les pipelines sont massivement utilisés pour transporter des fluides (liquides, liquéfiés ou gazeux) sur de longues distances.

Si leur enfouissement permet d'assurer des débits importants en toute discrétion, il est aussi problématique lorsqu'il faut en réaliser la maintenance, notamment pour faire face aux diverses agressions auxquelles sont soumis ces ouvrages de transport : milieu agressif, endommagement par des tiers ou par des mouvements de terrain, fluide transporté corrosif...

Pour prévenir des risques de fuite et assurer la sécurité publique et environnementale, les exploitants de pipelines doivent donc régulièrement vérifier l'état de leur réseau. A cet effet, des outils permettant de surveiller l'état des pipelines ont été développés.

Il est notamment connu d'effectuer des contrôles dits « par l'intérieur » à l'aide d'un robot introduit dans le pipeline. Ce robot, appelé aussi racleur ou PIG (de l'anglais « *Pipeline Inspection Gauge* »)*,* est poussé par la pression du fluide circulant à l'intérieur du pipeline et est équipé de capteurs reliés à une unité d'enregistrement configurée pour détecter des points de corrosion et des déformations du pipeline. Néanmoins, ce type de contrôle est coûteux et difficile à déployer. Qui plus est, le robot n'est pas adapté à tous les types de pipeline, notamment ceux présentant des diamètres restreints, des rétrécissements, des tronçons coudés...

Il est également connu d'effectuer des contrôles dits « par l'extérieur » à l'aide d'un chariot se déplaçant au-dessus du pipeline et sur lequel est montée une pluralité de capteurs magnétiques. Les capteurs sont configurés pour enregistrer un signal représentatif du champ magnétique induit par le champ magnétique terrestre dans le tronçon de pipeline contrôlé, ledit tronçon étant réalisé en matériau ferromagnétique (par exemple en acier). Si ce type de contrôle permet de géolocaliser les pipelines de manière relativement précise, il n'offre généralement pas une précision suffisante pour quantifier des points de corrosion ou de déformations du pipeline. En effet, si au niveau de tels dommages la composante du champ magnétique induit par le champ magnétique terrestre est proche de celle dudit champ magnétique terrestre, le champ magnétique induit se superpose sensiblement au champ magnétique terrestre, ce qui peut rendre la corrosion ou la déformation difficilement détectable. Qui plus est, seule une composante transversale du champ magnétique induit par le champ magnétique terrestre est généralement détectée, de sorte que la direction transversale perpendiculaire à cette composante représente un angle mort. Par ailleurs, une rémanence magnétique du pipeline peut fausser le contrôle et empêcher la détection d'une détérioration du pipeline.

Le document WO 2019/083923 A1 décrit un système de détection d'un matériau ferromagnétique dans une structure, le système de détection comprenant :

- une pluralité de capteurs de champ magnétique directionnel,
- une pluralité de sources ou de générateurs de champ magnétique, et
- un système de traitement matériel en communication électrique avec la pluralité de capteurs et de sources magnétiques.

Le système de traitement matériel est programmé avec une ou plusieurs routines logicielles s'exécutant sur le système de traitement matériel pour : 1) activer chacune de la pluralité de sources de champ magnétique ; 2) mesurer l'intensité du champ magnétique directionnel par chacun des capteurs magnétiques ; 3) désactiver chacune de la pluralité de sources de champ magnétique ; 4) mesurer la rémanence magnétique de la structure inspectée ; 5) prendre la différence entre la première et la deuxième mesure ; et 6) utiliser la différence pour déterminer la quantité et l'emplacement du matériau ferromagnétique dans ou à l'intérieur de la structure.

OBJET DE L'INVENTION

L'invention a donc pour but de proposer un procédé et un dispositif d'inspection d'un tronçon de canalisation permettant d'obvier au moins en partie aux inconvénients précités.

RESUME DE L'INVENTION

A cet effet, l'invention propose selon la revendication indépendante 1 un procédé d'inspection d'un tronçon de canalisation réalisé en matériau ferromagnétique et s'étendant en dessous d'une surface de sol selon un axe longitudinal.

Le procédé comprenant les étapes suivantes :

- a) enregistrer, à l'aide de magnétomètres agencés au-dessus de la surface de sol et du tronçon de canalisation, des premiers signaux représentatifs d'un premier champ magnétique combinant le champ magnétique terrestre et un champ magnétique induit par le champ magnétique terrestre dans le tronçon de canalisation, les magnétomètres étant alignés selon un axe sensiblement orthogonal à l'axe longitudinal du tronçon de canalisation et sensiblement parallèle à la surface de sol ;
- b) générer, à l'aide d'une première bobine parcourue par un premier courant présentant au moins une première valeur non nulle et une deuxième valeur non nulle et différente de la première valeur, un premier champ magnétique additionnel ayant une direction de polarisation différente de celle du champ magnétique induit par le champ magnétique terrestre dans le tronçon de canalisation ;
- c) enregistrer, à l'aide des magnétomètres, des deuxièmes signaux représentatifs d'un deuxième champ magnétique combinant le premier champ magnétique, le premier champ magnétique additionnel et un champ magnétique induit par ledit premier champ magnétique additionnel dans le tronçon de canalisation ;
- d) déterminer, à partir des deuxièmes signaux et sans utiliser les premiers signaux, des troisièmes signaux représentatifs de la combinaison du champ magnétique additionnel et du champ magnétique induit par ledit champ magnétique additionnel dans le tronçon de canalisation ;
- e) comparer les premiers signaux à des premiers seuils prédéterminés ;
- f) comparer les troisièmes signaux à des deuxièmes seuils prédéterminés ;
- g) déduire des comparaisons réalisées aux étapes e) et f) l'existence d'au moins un défaut dans le tronçon de canalisation.

L'enregistrement des premiers signaux permet de réaliser un sondage passif du tronçon de canalisation, et donc de détecter la présence éventuelle d'un défaut dans le tronçon de canalisation. Toutefois, comme on a pu le voir en introduction, un tel sondage peut comprendre des angles morts. La génération d'un champ magnétique additionnel permet de réaliser un sondage actif du tronçon de canalisation dans des conditions différentes de celles du sondage passif, ce qui permet la détection d'un défaut qui n'aurait pas été détecté lors du sondage passif.

De manière particulière, la direction de polarisation du premier champ magnétique additionnel est sensiblement perpendiculaire à l'axe longitudinal du tronçon de canalisation.

De préférence, la direction de polarisation du premier champ magnétique additionnel est sensiblement perpendiculaire à celle du champ magnétique induit par le champ magnétique terrestre dans le tronçon de canalisation.

Selon un mode de réalisation particulier de l'invention, le premier courant parcourant la première bobine est alternatif.

De manière particulière, le premier courant parcourant la première bobine est de forme rectangulaire ou sinusoïdale.

De manière particulière, le procédé comprend en outre les étapes suivantes :

- h) désactiver la première bobine et générer, à l'aide d'une deuxième bobine parcourue par un deuxième courant présentant au moins une première valeur non nulle et une deuxième valeur non nulle et différente de la première valeur, un deuxième champ magnétique additionnel ayant une direction de polarisation différente de celle du premier champ magnétique additionnel et de celle du champ magnétique induit par le champ magnétique terrestre dans le tronçon de canalisation ;
- i) enregistrer, à l'aide des magnétomètres, des quatrièmes signaux représentatifs d'un troisième champ magnétique combinant le premier champ magnétique, le deuxième champ magnétique additionnel et un champ magnétique induit par ledit deuxième champ magnétique additionnel dans le tronçon de canalisation ;
- j) déterminer, à partir des quatrièmes signaux et sans utiliser les premiers signaux, des cinquièmes signaux représentatifs de la combinaison du deuxième champ magnétique additionnel et du champ magnétique induit par ledit deuxième champ magnétique additionnel dans le tronçon de canalisation ;
- k) comparer les cinquièmes signaux à des troisièmes seuils prédéterminés ;
- l) déduire des comparaisons réalisées aux étapes e), f) et k) l'existence du défaut dans le tronçon de canalisation.

De manière particulière, la direction de polarisation du deuxième champ magnétique additionnel est sensiblement perpendiculaire à l'axe longitudinal du tronçon de canalisation.

De préférence, la direction de polarisation du deuxième champ magnétique additionnel est sensiblement perpendiculaire à la direction de polarisation du premier champ magnétique additionnel.

L'invention concerne également selon la revendication indépendante 9 un dispositif pour la mise en œuvre d'un tel procédé. Le dispositif comprend un châssis sur lequel sont montés les magnétomètres et la première bobine, les magnétomètres étant reliés à une unité d'enregistrement et de traitement agencée pour réaliser les étapes a), c), d), e), f) et g), un générateur de courant alternatif relié à la première bobine pour générer le premier courant, et des moyens d'orientation d'un axe d'enroulement de la première bobine.

L'invention concerne aussi selon la revendication indépendante 10 un dispositif pour la mise en œuvre d'un tel procédé dans lequel la deuxième bobine est montée sur la châssis, l'unité d'enregistrement et de traitement est agencée pour réaliser en outre les étapes i), j), k) et l), le générateur de courant alternatif est en outre relié la deuxième bobine pour générer le deuxième courant, et le dispositif comprenant en outre des moyens d'orientation d'un axe d'enroulement de la deuxième bobine.

Selon une caractéristique particulière, les magnétomètres sont des magnétomètres triaxiaux à vannes de flux.

## BREVE DESCRIPTION DES DESSINS

L'invention sera mieux comprise à la lumière de la description qui suit, laquelle est purement illustrative et non limitative, et doit être lue en regard des dessins annexés, parmi lesquels :

[Fig. 1A] la figure 1A est une vue schématique d'un dispositif d'inspection d'un tronçon de canalisation selon un premier mode de réalisation de l'invention, dans un premier état de fonctionnement ;

[Fig. 1B] la figure 1B est une vue identique à celle de la figure 1A, dans laquelle le dispositif d'inspection est dans un deuxième état de fonctionnement ;

[Fig. 2A] la figure 2A est une vue de face de la bobine du dispositif d'inspection illustré à la figure 1A ;

[Fig. 2B] la figure 2B est une vue de côté de la bobine illustrée à la figure 2A ;

[Fig. 3] la figure 3 est une vue schématique illustrant la mise en œuvre du procédé d'inspection par le dispositif d'inspection illustré à aux figures 1A et 1B ;

[Fig. 4A] la figure 4A est une vue schématique d'un dispositif d'inspection d'un tronçon de canalisation selon un deuxième mode de réalisation de l'invention, dans un premier état de fonctionnement ;

[Fig. 4B] la figure 4B est une vue identique à celle de la figure 4A, dans laquelle le dispositif d'inspection est dans un deuxième état de fonctionnement ;

[Fig. 5A] la figure 5A est une vue schématique d'une variante du dispositif d'inspection illustré à la figure 5A, dans un premier état de fonctionnement ;

[Fig. 5B] la figure 5B est une vue identique à celle de la figure 5A, dans laquelle le dispositif d'inspection selon cette variante est dans un deuxième état de fonctionnement.

## DESCRIPTION DETAILLEE DE L'INVENTION

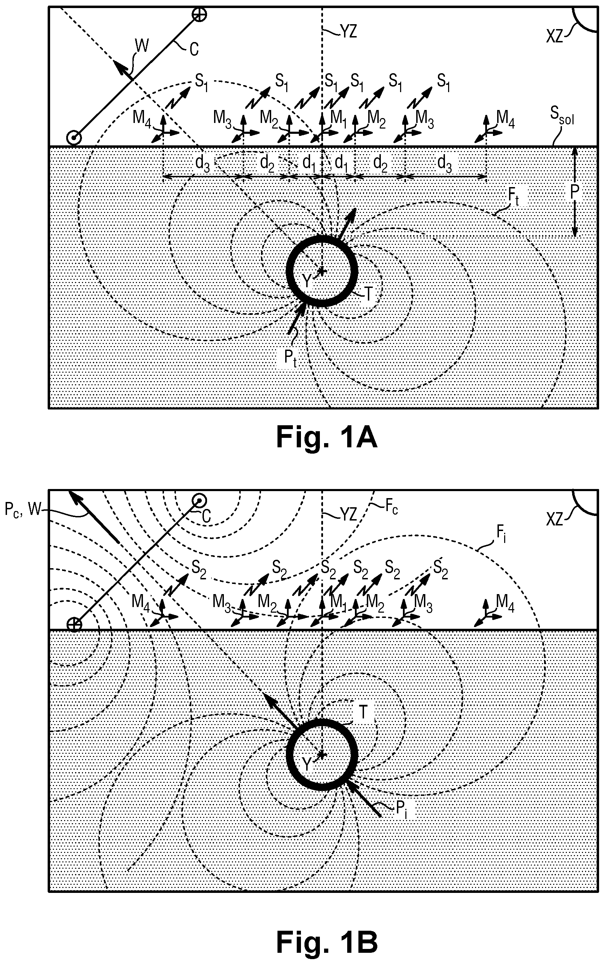

En référence aux figures 1A et 1B, un tronçon de canalisation T d'un pipeline est enfoui dans le sol à une profondeur $p$, ici sensiblement comprise entre 1 et 2 mètres par rapport à une surface $S_{sol}$ plane du sol. Ce pipeline est destiné au transport d'un fluide sous pression tel que du gaz sous pression, du pétrole... Le tronçon de canalisation T est de forme cylindrique et s'étend selon un axe Y longitudinal sensiblement parallèle à la surface $S_{sol}$ du sol. On comprendra que seule une section transversale du tronçon de canalisation T, selon un plan XZ perpendiculaire à l'axe Y, est visible sur les figures 1A et 1B.

Le tronçon de canalisation T est en matériau ferromagnétique (par exemple en acier) de sorte que le champ magnétique terrestre induit, dans ledit tronçon de canalisation T, un champ magnétique Ft ayant une direction de polarisation Pt sensiblement perpendiculaire à l'axe Y du tronçon de canalisation T.

Par ailleurs, le tronçon de canalisation T a été, lors de sa fabrication et de son transport jusqu'à son lieu d'enfouissement, levé et manipulé à l'aide d'électroaimants puissants, ce qui peut induire localement un champ magnétique rémanent (non illustré) de longue durée dans ledit tronçon de canalisation T.

Il est également connu d'appliquer, dans le tronçon de canalisation T, un courant électrique permettant d'abaisser son potentiel électrochimique en dessous d'une valeur donnée pour limiter la corrosion dudit pipeline. Le cas échéant, un champ magnétique (non illustré) est également induit dans le tronçon de canalisation T par cette protection cathodique du pipeline.

Pour inspecter le pipeline, il est prévu selon le procédé de l'invention de disposer, sur la surface $S_{sol}$ du sol au-dessus du pipeline, un chariot configuré pour se déplacer le long du pipeline selon une direction sensiblement parallèle à l'axe Y de manière à inspecter des tronçons de canalisation T successifs. A cet effet, le chariot comprend un châssis qui est par exemple porté par des roues et sur lequel est monté un réseau de magnétomètres $M_1$, $M_2$, $M_3$, $M_4$ alignés selon un axe sensiblement perpendiculaire à la direction d'avancement du chariot et parallèle à la surface $S_{sol}$ du sol.

Le réseau de magnétomètres $M_1$, $M_2$, $M_3$, $M_4$ comprend un magnétomètre central $M_1$, deux premiers magnétomètres latéraux $M_2$, deux deuxièmes magnétomètres latéraux $M_3$ et deux troisièmes magnétomètres latéraux $M_4$. Les magnétomètres latéraux $M_2$, $M_3$, $M_4$ sont répartis symétriquement de part et d'autre du magnétomètre central $M_1$. Les premiers magnétomètres latéraux $M_2$ sont espacés du magnétomètre central $M_1$ d'une distance $d_1$. Les deuxièmes

magnétomètres latéraux M₃ sont espacés des premiers magnétomètres latéraux M₂ d'une distance d₂ supérieure à la distance d₁. Les troisièmes magnétomètres latéraux M₄ sont espacés des deuxièmes magnétomètres latéraux M₃ d'une distance d₃ supérieure à la distance d₂. De préférence, la distance d₁ est sensiblement égale à un rayon extérieur r du tronçon de canalisation T ou à 10% de la profondeur $p$ d'enfouissement du tronçon de canalisation T. La distance d₂ est ici sensiblement égale à deux fois la distance d₁, et la distance d₃ est ici sensiblement égale à trois fois la distance d₁. De préférence encore, les troisièmes magnétomètres latéraux M₄ sont espacés du magnétomètre central M₁ d'une distance sensiblement égale à deux fois la profondeur $p$ d'enfouissement du tronçon de canalisation T.

Les magnétomètres M₁, M₂, M₃, M₄ sont ici des magnétomètres triaxiaux à vannes de flux (de l'anglais « fluxgate ») qui sont reliés à une unité d'enregistrement et de traitement pour mesurer et enregistrer l'orientation et l'intensité d'un flux magnétique compris entre 0,1 nanotesla et 1 millitesla, avec une précision de l'ordre du nanotesla. Les magnétomètres M₁, M₂, M₃, M₄ sont ici identiques.

Le chariot comprend en outre une bobine C ayant un axe W d'enroulement qui s'étend dans un plan perpendiculaire à la direction d'avancement du chariot et dans lequel s'étendent les magnétomètres M₁, M₂, M₃, M₄. La bobine C est montée sur le châssis du chariot via des moyens d'orientation permettant de régler l'orientation de l'axe W de la bobine C dans ledit plan. On notera que les magnétomètres M₁, M₂, M₃, M₄ s'étendent à l'extérieur de la bobine C.

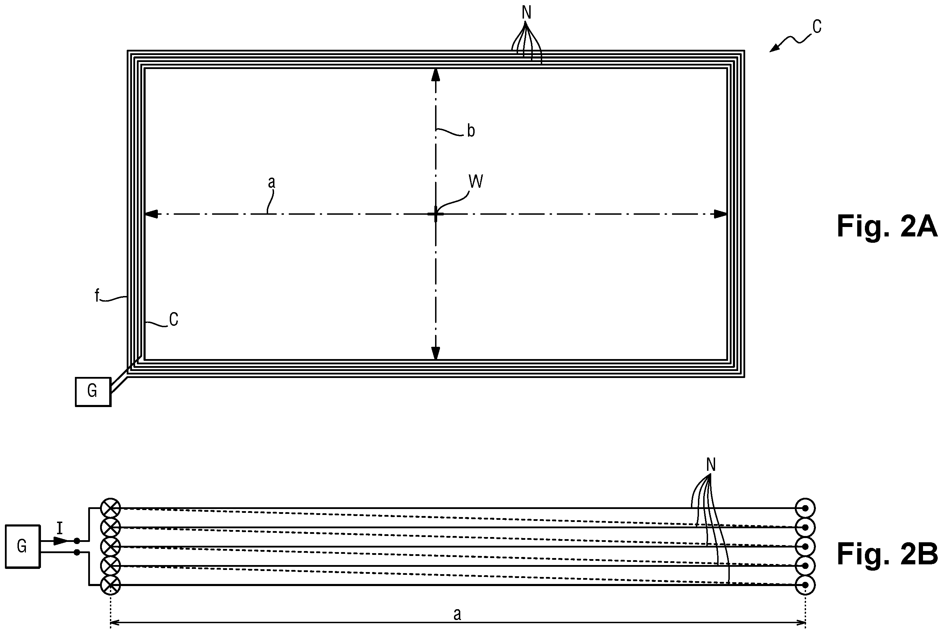

En référence aux figures 2A et 2B, la bobine C comprend un cadre c de forme rectangulaire autour duquel est enroulé un fil conducteur f, ici en cuivre, formant des spires N. L'axe W de la bobine C est perpendiculaire au cadre *c* d'enroulement du fil conducteur *f* et passe par le centre dudit cadre.

Pour une profondeur $p$ d'enfouissement du tronçon de canalisation T sensiblement égale à 1,5 mètre, le cadre *c* de la bobine C a, par exemple, une longueur a sensiblement égale à 3 mètres et une largeur *b* sensiblement égale à 1 mètre, la longueur *a* s'étendant parallèlement à la direction de déplacement du chariot. Le fil conducteur *f* de la bobine C a un diamètre *d* sensiblement égal 1 millimètre et le nombre de spires N est sensiblement égal à 100, de sorte que le fil conducteur *f* a une longueur *l* sensiblement égale à 800 mètres. Selon la formule connue suivante (où $\rho_{Cu}$ est la résistivité du cuivre), la bobine C présente une résistance R_coil sensiblement égale à 16 Ohm (Ω) :

$$R_{coil} = \rho_{Cu}\frac{4l}{\pi d^2} = 1.6*10^{-8}\frac{4*800}{\pi 10^{-6}} = \frac{51.2}{\pi}*10^{-8+6+2} \approx 16\Omega$$

La bobine C est reliée à un générateur de courant G porté par le chariot. Le générateur de courant G comprend ici un onduleur relié à une batterie délivrant une tension continue sensiblement égale à 24 volts, de sorte que la bobine C est parcourue par un courant I alternatif ayant une amplitude sensiblement égale à 1,5 ampère. La bobine C génère alors un champ magnétique F_c ayant une intensité variable et une direction de polarisation P_c s'étendant selon l'axe W (figure 1B).

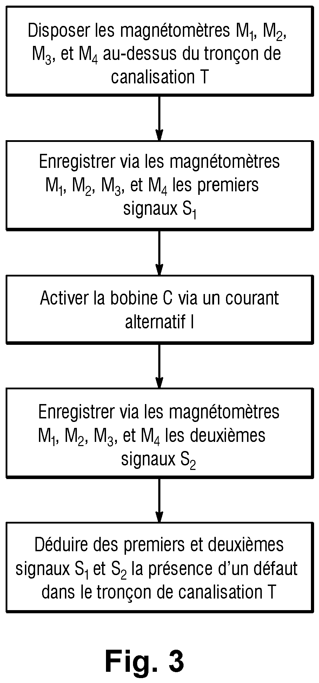

En regard de la figure 3, le procédé d'inspection du tronçon de canalisation T va maintenant être détaillé.

Le chariot est amené au-dessus du tronçon de canalisation T de manière à ce que la direction d'avancement du chariot soit sensiblement parallèle à l'axe Y du tronçon de canalisation T et que le magnétomètre central M₁ et ledit axe Y définissent un plan YZ sensiblement perpendiculaire à la surface S_sol du sol. Les magnétomètres M₁, M₂, M₃, M₄ s'étendent alors selon un axe sensiblement orthogonal à l'axe Y du tronçon de canalisation T et parallèle à la surface S_sol du sol.

La bobine C est orientée de façon à ce que son axe W d'enroulement ait une direction différente de celle de la polarisation Pt du champ magnétique Ft induit dans le tronçon de canalisation par le champ magnétique terrestre. De préférence, l'axe W de la bobine C est perpendiculaire à l'axe Y. De préférence encore, l'axe W de la bobine C est perpendiculaire à l'axe Y et à la direction de la polarisation Pt du champ magnétique Ft induit dans le tronçon de canalisation T par le champ magnétique terrestre.

Dans un premier temps, la bobine C n'est pas reliée au générateur de courant G et ne génère donc pas le champ magnétique F_c additionnel (figure 1A). On réalise alors un sondage dit « passif » du tronçon de canalisation T qui consiste à enregistrer, à l'aide des magnétomètres M₁, M₂, M₃, M₄, des premiers signaux S₁ représentatifs d'un champ magnétique B_E combinant :

- le champ magnétique terrestre,
- le champ magnétique Ft induit par le champ magnétique terrestre dans le tronçon de canalisation T,
- le champ magnétique rémanent dans le tronçon de canalisation T (le cas échéant),
- le champ magnétique induit par le courant appliqué dans le tronçon de canalisation T en vue de sa protection cathodique (le cas échéant).

Lorsque le tronçon de canalisation T ne comprend aucun défaut (fissure, corrosion, déformation...), le champ magnétique B_E présente des caractéristiques de propagation prévisibles en fonction des propriétés physiques du matériau dans lequel est réalisé ledit tronçon de canalisation T. Chacun des premiers signaux S₁ a alors, dans le plan XZ perpendiculaire à l'axe Y, une composante sensiblement proche d'un premier seuil prédéterminé en fonction des caractéristiques prévisibles.

Cependant, la présence d'un défaut dans le tronçon de canalisation T provoque une altération de la propagation du champ magnétique $B_E$ sous la forme d'anomalies appelées « fuites de flux magnétique ». Les caractéristiques de propagation sont alors différentes des caractéristiques de propagation attendues et la composante d'au moins un des premiers signaux $S_1$ est éloignée du premier seuil associé.

Ainsi, en comparant les premiers signaux $S_1$ aux premiers seuils, l'unité d'enregistrement et de traitement peut en déduire la présence d'un défaut dans le tronçon de canalisation T.

Néanmoins, si le défaut altérant la propagation du champ magnétique $B_E$ dans le tronçon de canalisation T est tel que ledit champ magnétique $B_E$ se superpose au champ magnétique terrestre, il ne peut être détecté à partir du sondage passif.

Dans un deuxième temps, la bobine C est alimentée par le générateur de courant G alternatif et génère alors le champ magnétique $F_c$ additionnel (figure 1B). Le champ magnétique $F_c$ induit, dans le tronçon de canalisation T, un champ magnétique $F_i$ ayant une direction de polarisation $D_i$ sensiblement identique à celle de la polarisation $D_c$ du champ magnétique $F_c$ généré par la bobine C. L'intensité du champ magnétique $F_i$ est inversement proportionnelle à la distance entre la bobine C et ledit tronçon de canalisation T, et est directement proportionnelle à l'intensité du courant I traversant la bobine C.

Dès lors, l'alimentation de la bobine C génère un champ magnétique $B_c$ combinant le champ magnétique $F_c$ et le champ magnétique $F_i$ induit par ledit champ magnétique $F_c$ dans le tronçon de canalisation T. Le champ magnétique $B_c$ est ainsi proportionnel à l'intensité du courant I délivré par le générateur de courant G :

$$\vec{B}_C = \frac{\partial \vec{B}_C}{\partial I} I$$

On réalise alors un sondage dit « actif » du tronçon de canalisation T qui consiste à enregistrer, à l'aide des magnétomètres $M_1$, $M_2$, $M_3$, $M_4$, des deuxièmes signaux $S_2$ représentatifs d'un champ magnétique B combinant le champ magnétique $B_E$ et le champ magnétique $B_C$ :

$$\vec{B} = \vec{B}_E + \vec{B}_C = \vec{B}_E + \frac{\partial \vec{B}_C}{\partial I} I$$

Pour détecter, à partir des deuxièmes signaux $S_2$ (et sans l'aide des premiers signaux $S_1$), la présence d'un défaut dans le tronçon de canalisation T, il est nécessaire de découpler le champ magnétique $B_C$ du champ magnétique $B_E$.

Une première méthode consiste à configurer l'onduleur pour que le courant I traversant la bobine C soit de forme rectangulaire avec une valeur moyenne nulle (et donc avec une valeur basse et une valeur haute non nulles), de sorte que :

$$\vec{B}_C^{\pm} = \frac{\partial \vec{B}_C}{\partial I} I^{\pm} = \pm \frac{\partial \vec{B}_C}{\partial I} I$$

Un tel courant I engendre alors deux états différents du champ magnétique B, à savoir :

$$\vec{B}^+ = \vec{B}_E + \vec{B}_C^+ = \vec{B}_E + \frac{\partial \vec{B}_C}{\partial I} I \quad et \quad \vec{B}^- = \vec{B}_E + \vec{B}_C^- = \vec{B}_E - \frac{\partial \vec{B}_C}{\partial I} I$$

En soustrayant ces deux états, on obtient :

$$\frac{\partial \vec{B}_C}{\partial I} = \frac{\vec{B}^+ - \vec{B}^-}{2I}$$

et donc le découplage du champ magnétique $B_C$ (sans utiliser les premiers signaux $S_1$).

On notera également qu'en additionnant ces deux états, on obtient :

$$\vec{B}_E = \frac{\vec{B}^+ + \vec{B}^-}{2}$$

et donc le découplage du champ magnétique $B_E$, de sorte que le sondage passif pourrait être omis. Néanmoins, il apparaît que le sondage passif permet une détection plus précise du champ magnétique $B_E$ et donc du défaut.

Une deuxième méthode consiste à configurer l'onduleur pour que le courant I traversant la bobine C soit de forme sinusoïdale avec une valeur moyenne nulle, de sorte que :

$$I(t) = I \sin(t) \Rightarrow \vec{B}_C(t) = \frac{\partial \vec{B}_C}{\partial I} I \sin(t)$$

De préférence, la fréquence du courant I est choisie volontairement basse (par exemple autour de 1 Hertz, voire quelques Hertz) pour que toute tension induite par la variation temporelle *t* entraîne une réponse négligeable par rapport aux champs magnétiques $F_t$, $F_i$ induits dans le tronçon de canalisation T.

En intégrant sur un cycle complet le champ magnétique B multiplié par *sin(t),* on obtient :

$$\int_0^{2\pi} \vec{B}(t) \sin t \, dt = \int_0^{2\pi} \left( \vec{B}_E \sin t + \frac{\partial \vec{B}_C}{\partial I} I \sin^2 t \right) dt = \pi \frac{\partial \vec{B}_C}{\partial I} I$$

et donc le découplage du champ magnétique $B_C$ (sans utiliser les premiers signaux $S_1$).

Une telle méthode de découplage permet d'éviter les signaux harmoniques d'ordre supérieur et leur distorsion associée.

Une troisième méthode consiste à configurer l'onduleur pour que le courant I traversant la bobine C soit de forme rectangulaire avec :

- une valeur moyenne $I_{moy}$ non nulle ; et
- une valeur basse $I_{min}$ non nulle et une valeur haute $I_{max}$ non nulle, avec $I_{moy}=(I_{max}+I_{min})/2$.

Un tel courant I engendre alors deux états différents du champ magnétique B, à savoir :

$$\vec{B}^+ = \vec{B}_E + \vec{B}_C^+ = \vec{B}_E + \frac{\partial \vec{B}_C}{\partial I} I_{max} \quad et \quad \vec{B}^- = \vec{B}_E + \vec{B}_C^- = \vec{B}_E + \frac{\partial \vec{B}_C}{\partial I} I_{min}$$

En soustrayant ces deux états, on obtient :

$$\frac{\partial \vec{B}_C}{\partial I} = \frac{\vec{B}^+ - \vec{B}^-}{I_{max} - I_{min}}$$

et donc le découplage du champ magnétique $B_C$ (sans utiliser les premiers signaux $S_1$).

On notera également que les deux états différents du champ magnétique B peuvent s'écrire sous forme matricielle :

$$\begin{pmatrix} \vec{B}^- \\ \vec{B}^+ \end{pmatrix} = \begin{pmatrix} 1 & I_{min} \\ 1 & I_{max} \end{pmatrix} \begin{pmatrix} \vec{B}_E \\ \frac{\partial \vec{B}_C}{\partial I} \end{pmatrix}$$

On obtient alors :

$$\begin{pmatrix} \vec{B}_E \\ \dfrac{\partial \vec{B}_C}{\partial I} \end{pmatrix} = \frac{1}{I_{max} - I_{min}} \begin{pmatrix} I_{max} & -I_{min} \\ -1 & 1 \end{pmatrix} \begin{pmatrix} \vec{B}^- \\ \vec{B}^+ \end{pmatrix} \Rightarrow \vec{B}_E = \frac{I_{max}\vec{B}^- - I_{min}\vec{B}^+}{I_{max} - I_{min}}$$

et donc le découplage du champ magnétique $B_E$, de sorte que le sondage passif pourrait être omis. Néanmoins, il apparaît que le sondage passif permet une détection plus précise du champ magnétique $B_E$ et donc du défaut.

De manière plus générale, le générateur de courant G peut ne pas être alternatif et être agencé pour que le courant I traversant la bobine C présente une première valeur $I_{v1}$ non nulle pendant un instant $t_1$ et une deuxième valeur $I_{v2}$ non nulle pendant un instant $t_2$, la première valeur $I_{v1}$ étant différente de la deuxième valeur $I_{v2}$.

Un tel courant I engendre alors deux états différents du champ magnétique B, à savoir :

$$\vec{B}^1 = \vec{B}_E + \vec{B}_C^1 = \vec{B}_E + \frac{\partial \vec{B}_C}{\partial I} I_{v1} \quad et \quad \vec{B}^2 = \vec{B}_E + \vec{B}_C^2 = \vec{B}_E + \frac{\partial \vec{B}_C}{\partial I} I_{v2}$$

En soustrayant ces deux états, on obtient :

$$\frac{\partial \vec{B}_C}{\partial I} = \frac{\vec{B}^2 - \vec{B}^1}{I_{v2} - I_{v1}}$$

et donc le découplage du champ magnétique $B_C$ (sans utiliser les premiers signaux $S_1$).

Les deux états différents du champ magnétique B peuvent s'écrire sous forme matricielle :

$$\begin{pmatrix} \vec{B}^1 \\ \vec{B}^2 \end{pmatrix} = \begin{pmatrix} 1 & I_{v1} \\ 1 & I_{v2} \end{pmatrix} \begin{pmatrix} \vec{B}_E \\ \dfrac{\partial \vec{B}_C}{\partial I} \end{pmatrix}$$

On obtient alors :

$$\begin{pmatrix} \vec{B}_E \\ \dfrac{\partial \vec{B}_C}{\partial I} \end{pmatrix} = \frac{1}{I_{v2} - I_{v1}} \begin{pmatrix} I_{v2} & -I_{v1} \\ -1 & 1 \end{pmatrix} \begin{pmatrix} \vec{B}^1 \\ \vec{B}^2 \end{pmatrix} \Rightarrow \vec{B}_E = \frac{I_{v2}\vec{B}^1 - I_{v1}\vec{B}^2}{I_{v2} - I_{v1}}$$

et donc le découplage du champ magnétique $B_E$, de sorte que le sondage passif pourrait être omis. Néanmoins, il apparaît que le sondage passif permet une détection plus précise du champ magnétique $B_E$ et donc du défaut.

Une quatrième méthode consiste à configurer l'onduleur pour que le courant I traversant la bobine C soit de forme sinusoïdale avec :

-    une valeur moyenne $I_{moy}$ non nulle ; et
-    une valeur basse $I_{min}$ non nulle et une valeur haute $I_{max}$ non nulle avec $I_{moy} = (I_{max} + I_{min})/2$ ;

de sorte que :

$$I(t) = \left(\frac{I_{max} - I_{min}}{2}\right) sin(t) + I_{moy} \Rightarrow \vec{B}_C(t) = \frac{\partial \vec{B}_C}{\partial I} \left[\left(\frac{I_{max} - I_{min}}{2}\right) sin(t) + I_{moy}\right]$$

En intégrant sur un cycle complet le champ magnétique B multiplié par *sin(t)*, on obtient :

$$\int_0^{2\pi} \vec{B}(t)\, \sin t\, dt = \int_0^{2\pi} \left(\vec{B}_E + \vec{B}_C\right) \sin t\, dt$$

$$= \int_0^{2\pi} \left(\vec{B}_E + \frac{\partial \vec{B}_C}{\partial I} I_{moy}\right) \sin t\, dt + \int_0^{2\pi} \left(\frac{\partial \vec{B}_C}{\partial I} \frac{I_{max} - I_{min}}{2}\right) \sin^2 t\, dt$$

$$= \left(\frac{\partial \vec{B}_C}{\partial I} \frac{I_{max} - I_{min}}{2}\right) \int_0^{2\pi} \sin^2 t\, dt = \pi \frac{\partial \vec{B}_C}{\partial I} \frac{I_{max} - I_{min}}{2}$$

et donc le découplage du champ magnétique $B_C$ (sans utiliser les premiers signaux $S_1$).

Dès lors, l'unité d'enregistrement et de traitement peut, à partir des deuxièmes signaux $S_2$ (et sans l'aide des premiers signaux $S_1$), déterminer des troisièmes signaux $S_3$ représentatifs de la combinaison du champ magnétique $F_c$ et du champ magnétique $F_i$ induit par ledit champ magnétique $F_c$.

Comme précédemment, lorsque le tronçon de canalisation T ne comprend aucun défaut (fissure, corrosion, déformation...), le champ magnétique $B_C$ a des caractéristiques de propagation prévisibles en fonction des propriétés physiques du matériau dans lequel est réalisé ledit tronçon de canalisation T. Chacun des troisièmes signaux $S_3$ a alors, dans un plan défini par l'axe W de la bobine C et les magnétomètres $M_1$, $M_2$, $M_3$, $M_4$, une composante sensiblement proche d'un deuxième seuil prédéterminé en fonction des caractéristiques prévisibles.

Cependant, la présence d'un défaut dans le tronçon de canalisation T altère la propagation du champ magnétique $B_C$ à l'intérieur du tronçon de canalisation T et provoque des fuites de flux magnétique. La composante d'au moins un des troisièmes signaux $S_3$ est alors éloignée du deuxième seuil associé.

Ainsi, en comparant les troisièmes signaux $S_3$ aux deuxièmes seuils, l'unité d'enregistrement et de traitement peut en déduire la présence d'un défaut dans le tronçon de canalisation T, notamment lorsque le sondage passif ne permet pas de détecter ce défaut.

Néanmoins, si le défaut altérant la propagation du champ magnétique $B_C$ dans le tronçon de canalisation T est tel que ledit champ magnétique $B_C$ se superpose au champ magnétique terrestre, le défaut ne peut être détecté à partir du sondage actif (mais vraisemblablement à partir du sondage passif).

Dès lors, le sondage actif permet la détection d'un défaut qui n'aurait pu être détecté par le sondage passif.

Le procédé d'inspection décrit ci-dessus est bien entendu mis en œuvre pour chaque tronçon du pipeline à contrôler en déplaçant le chariot le long du pipeline selon une direction sensiblement parallèle à l'axe Y.

Afin d'améliorer la détection d'un défaut dans le tronçon de canalisation T, le procédé d'inspection décrit ci-dessus peut être étendu en mettant en œuvre deux champs magnétiques additionnels.

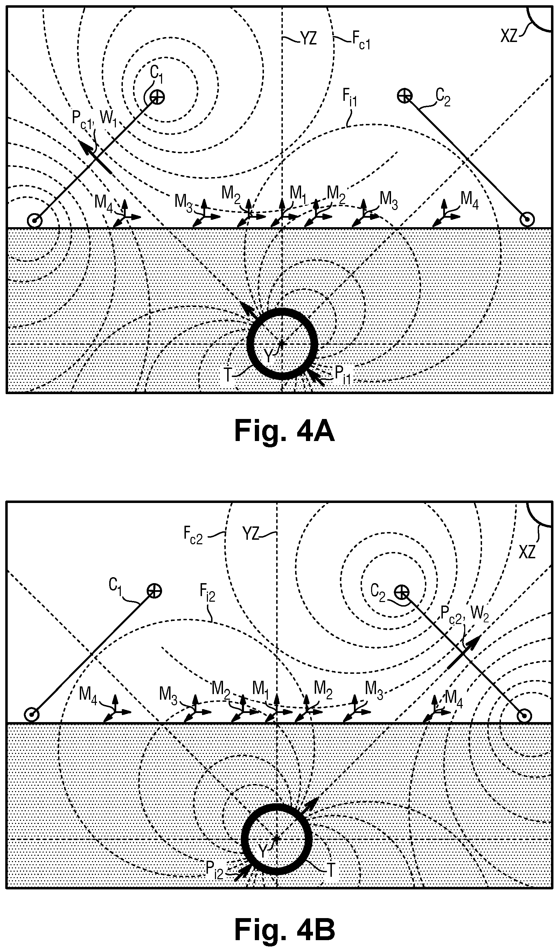

Ainsi, selon un deuxième mode de réalisation de l'invention illustré aux figures 4A, 4B, le chariot comprend non pas une mais deux bobines $C_1$, $C_2$ de forme rectangulaire. Les bobines $C_1$, $C_2$ ont des axes $W_1$, $W_2$ d'enroulement distincts qui s'étendant dans un plan perpendiculaire à la direction d'avancement du chariot et dans lequel s'étendent les magnétomètres $M_1$, $M_2$, $M_3$, $M_4$. On notera que les magnétomètre $M_1$, $M_2$, $M_3$, $M_4$ s'étendent à l'extérieur des bobines $C_1$, $C_2$.

Les bobines $C_1$, $C_2$ sont montées sur le châssis du chariot via des moyens d'orientation permettant de régler l'orientation des axes $W_1$, $W_2$ des bobines $C_1$, $C_2$ de façon à ce que lesdits axes $W_1$, $W_2$ aient une direction différente de celle de la polarisation Pt du champ magnétique Ft induit dans le tronçon de canalisation T par le champ magnétique terrestre. De préférence, les axes $W_1$, $W_2$ des bobines sont perpendiculaires à l'axe Y. De préférence encore, les axes $W_1$, $W_2$ des bobines sont perpendiculaires à l'axe Y et l'axe $W_1$ de la bobine $C_1$ est perpendiculaire à l'axe $W_2$ de la bobine $C_2$. Les bobines $C_1$, $C_2$ s'étendent ici symétriquement de part et d'autre du plan YZ défini par l'axe Y et le magnétomètre central $M_1$.

Les bobines $C_1$, $C_2$ sont reliées sélectivement au générateur de courant G alternatif pour être parcourues l'une après l'autre par un courant $I_1$, $I_2$ alternatif ayant une valeur minimale et une valeur maximale non nulles, et ainsi générer l'une après l'autre un champ magnétique $F_{c1}$, $F_{c2}$ additionnel ayant une direction de polarisation $P_{c1}$, $P_{c2}$ ici sensiblement perpendiculaire à l'axe Y du tronçon de canalisation T.

Le champ magnétique $F_{c1}$ induit, dans le tronçon de canalisation T, un champ magnétique $F_{i1}$ ayant une direction de polarisation $P_{i1}$ sensiblement identique à celle de la polarisation $P_{c1}$ du champ magnétique $F_{c1}$ généré par la bobine $C_1$. L'activation de la bobine $C_1$ génère ainsi un champ magnétique $B_{C1}$ combinant le champ magnétique $F_{C1}$ et le champ magnétique $F_{i1}$ induit par ledit champ magnétique $F_{c1}$. Comme décrit précédemment, le champ magnétique $B_{C1}$ peut être découplé du champ magnétique $B_E$.

De même, le champ magnétique $F_{c2}$ induit, dans le tronçon de canalisation T, un champ magnétique $F_{i2}$ ayant une direction de polarisation $P_{i2}$ sensiblement identique à celle de la polarisation $P_{c2}$ du champ magnétique $F_{c2}$ généré par la bobine $C_2$. L'activation de la bobine $C_2$ génère ainsi un champ magnétique $B_{C2}$ combinant le champ magnétique $F_{c2}$ et le

champ magnétique $F_{i2}$ induit par ledit champ magnétique $F_{c2}$. Comme décrit précédemment, le champ magnétique $B_{C2}$ peut être découplé du champ magnétique $B_E$.

Le découplage indépendant des champs magnétiques $B_{C1}$, $B_{C2}$ permet de combiner le sondage passif à deux sondages actifs et donc d'améliorer la détection d'un éventuel défaut dans le tronçon de canalisation T.

On notera que, si l'intensité du courant $I_1$ traversant la première bobine $C_1$ est ici sensiblement identique à l'intensité du courant $I_2$ traversant la deuxième bobine $C_2$, elle peut aussi être différente.

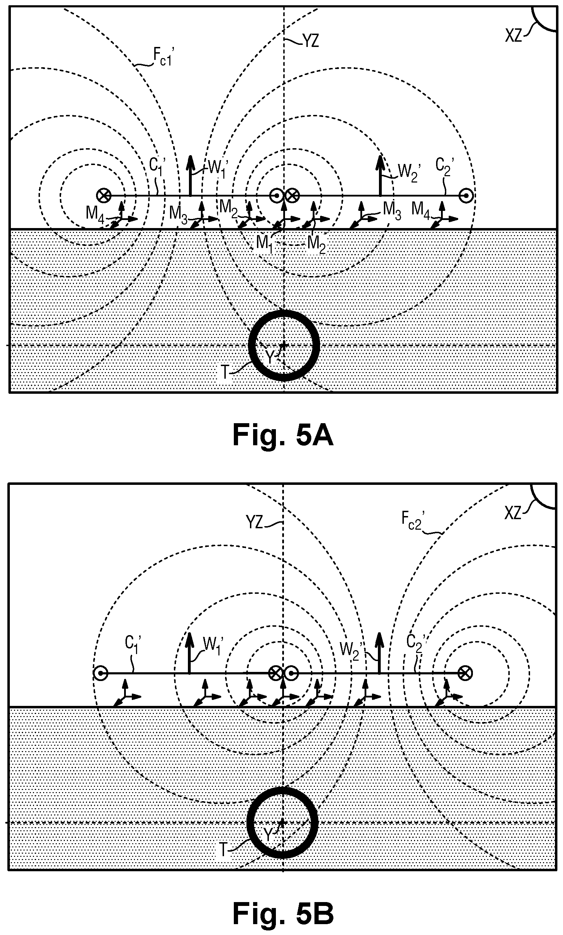

Selon une variante du deuxième mode de réalisation de l'invention illustrée aux figures 5A, 5B, le chariot comprend deux bobines $C_1$', $C_2$' de forme rectangulaire. Les bobines ont des axes $W_1$', $W_2$' d'enroulement sensiblement perpendiculaires à la surface $S_{sol}$ du sol. Les bobines $C_1$', $C_2$' s'étendent sensiblement symétriquement de part et d'autre du plan YZ et sont ici sensiblement adjacentes.

On notera que les magnétomètres $M_1$, $M_2$, $M_3$, $M_4$ s'étendent à l'extérieur des bobines $C_1$', $C_2$'.

Les bobines $C_1$', $C_2$' sont reliées sélectivement au générateur de courant G alternatif pour être parcoures l'une après l'autre par un courant $I_1$', $I_2$' alternatif ayant une valeur minimale et une valeur maximale non nulles, et ainsi générer l'une après l'autre un champ magnétique $F_{c1}$', $F_{c2}$' ayant une direction de polarisation sensiblement perpendiculaire à la surface $S_{sol}$ du sol. Les champs magnétiques $F_{c1}$', $F_{c2}$' induisent respectivement, dans le tronçon de canalisation T, un champ magnétique $F_{i1}$', $F_{i2}$'. L'activation de la bobine $C_1$' génère ainsi un champ magnétique $B_{C1}$' combinant le champ magnétique $F_{c1}$' et le champ magnétique induit dans le tronçon de canalisation T par ledit champ magnétique $F_{c1}$'. De même, l'activation de la bobine $C_2$' génère un champ magnétique $B_{C2}$' combinant le champ magnétique $F_{c2}$' et le champ magnétique induit dans le tronçon de canalisation T par ledit champ magnétique $F_{c2}$'.

Comme décrit précédemment, le découplage indépendant des champs magnétiques $B_{c1}$', $B_{C2}$' permet de combiner le sondage passif à deux sondages actifs, et donc d'améliorer la détection d'un éventuel défaut dans le tronçon de canalisation T.

Pour garantir une exploitation optimale des signaux délivrés par les magnétomètres $M_1$, $M_2$, $M_3$, $M_4$, il est nécessaire de connaître avec précision la position et l'orientation relatives de chacun desdits magnétomètres $M_1$, $M_2$, $M_3$, $M_4$, mais aussi de procéder à leur étalonnage en vue du sondage passif et du (des) sondage(s) actif(s).

En vue du sondage passif, on réalise un premier étalonnage des magnétomètres $M_1$, $M_2$, $M_3$, $M_4$ en plaçant, en absence de la (des) bobines(s) C, $C_1$, $C_2$, $C_1$', $C_2$', le réseau de magnétomètres $M_1$, $M_2$, $M_3$, $M_4$ à proximité d'un étalon soumis au champ magnétique terrestre sans aucune autre perturbation magnétique. L'étalon est un magnétomètre triaxial à vannes de flux de grande précision. La comparaison des signaux délivrés par les magnétomètres $M_1$, $M_2$, $M_3$, $M_4$ avec ceux délivrés par l'étalon permet à une unité de calcul de déterminer, pour chaque magnétomètre $M_1$, $M_2$, $M_3$, $M_4$, des données d'étalonnage visant à corriger des composantes vectorielles et des désalignements mineurs des signaux délivrés par le magnétomètre considéré. Les données d'étalonnage sont stockées dans l'unité de traitement qui les utilise pour corriger les signaux délivrés par les magnétomètres $M_1$, $M_2$, $M_3$, $M_4$ lors du sondage passif.

En vue du (des) sondage(s) actif(s), on réalise un deuxième étalonnage en plaçant, en présence de la (des) bobines(s) C, $C_1$, $C_2$, $C_1$', $C_2$', le réseau de magnétomètres $M_1$, $M_2$, $M_3$, $M_4$ à proximité de l'étalon soumis au champ magnétique terrestre sans aucune autre perturbation magnétique. Dans un premier temps, alors que la (les) bobine(s) est (sont) désactivée(s), l'unité de calcul procède à la comparaison des signaux délivrés par les magnétomètres $M_1$, $M_2$, $M_3$, $M_4$ avec ceux délivrés par l'étalon, et détermine des premières données d'étalonnage. Puis la bobine C ou les bobines $C_1$, $C_2$, $C_1$', $C_2$' sont activées l'une après l'autre par un courant alternatif fortement réduit. L'unité de calcul procède alors au découplage du champ magnétique généré par la (les) bobine(s) vis-à-vis du champ magnétique terrestre, puis détermine, pour chaque magnétomètres $M_1$, $M_2$, $M_3$, $M_4$, des deuxièmes données d'étalonnage visant à corriger les composantes vectorielles des signaux délivrés par le magnétomètre lors de l'activation de chaque bobine $C_1$, $C_2$, $C_1$', $C_2$'. Les première et deuxièmes données d'étalonnage sont stockées dans l'unité de traitement qui les utilise pour corriger les signaux délivrés par les magnétomètres $M_1$, $M_2$, $M_3$, $M_4$ lors du (des) sondage(s) actif(s).

Bien entendu, l'invention n'est pas limitée au mode de réalisation décrit mais englobe toute variante entrant dans le champ de l'invention telle que définie par les revendications.

Bien que le nombre de magnétomètres est ici égal à sept, il peut être inférieur ou supérieur à sept, mais doit être supérieur à deux.

Le nombre de bobines peut être supérieur à deux.

Bien qu'ici les magnétomètres sont des magnétomètres à vannes de flux, d'autres types de magnétomètre peuvent être utilisés (magnétomètres magnétorésistifs, à effet Hall...) .

Bien que le châssis (sur lequel sont montés les magnétomètres et la(les) bobine(s)) soit ici porté par des roues, il peut être porté par tout système permettant de déplacer le châssis le long du pipeline.

Bien que le courant alternatif ($I$, $I_1$, $I_1$' $I_2$, $I_2$') parcourant la bobine (C, $C_1$, $C_1$', $C_2$, $C_2$') soit ici de forme rectangulaire ou sinusoïdal, il peut être d'autres formes (carrée, triangulaire, créneau...).

Le courant ($I$, $I_1$, $I_1$' $I_2$, $I_2$') parcourant la bobine (C, $C_1$, $C_1$', $C_2$, $C_2$') peut ne pas être alternatif mais il devra alors présenter au moins une première valeur non nulle et une deuxième valeur non nulle et différente de la première valeur (comme c'est le cas pour un courant alternatif).

**Revendications**

1. Procédé d'inspection d'un tronçon de canalisation (T) réalisé en matériau ferromagnétique et s'étendant en dessous d'une surface ($S_{sol}$) de sol selon un axe longitudinal (Y), le procédé comprenant les étapes suivantes :

   • a) enregistrer, à l'aide de magnétomètres ($M_1$, $M_2$, $M_3$, $M_4$) agencés au-dessus de la surface de sol et du tronçon de canalisation, des premiers signaux ($S_1$) représentatifs d'un premier champ magnétique ($B_E$) combinant le champ magnétique terrestre et un champ magnétique ($F_t$) induit par le champ magnétique terrestre dans le tronçon de canalisation, les magnétomètres étant alignés selon un axe sensiblement orthogonal à l'axe longitudinale du tronçon de canalisation et sensiblement parallèle à la surface de sol ;
   • b) générer, à l'aide d'une première bobine (C, $C_1$, $C_1$') parcourue par un premier courant (I, $I_1$, $I_1$') présentant au moins une première valeur ($I_{min}$, $I_{v1}$) non nulle et une deuxième valeur ($I_{max}$, $I_{v2}$) non nulle et différente de la première valeur, un premier champ magnétique additionnel ($F_c$, $F_{c1}$, $F_{c1}$') ayant une direction de polarisation ($P_c$, $P_{c1}$, $P_{c1}$') différente de celle (Pt) du champ magnétique ($Ft$) induit par le champ magnétique terrestre dans le tronçon de canalisation ;
   • c) enregistrer, à l'aide des magnétomètres, des deuxièmes signaux ($S_2$) représentatifs d'un deuxième champ magnétique (B) combinant le premier champ magnétique ($B_E$), le premier champ magnétique additionnel ($F_c$, $F_{c1}$, $F_{c1}$') et un champ magnétique ($F_i$, $F_{i1}$, $F_{i1}$') induit par ledit premier champ magnétique additionnel dans le tronçon de canalisation ;
   • d) déterminer, à partir des deuxièmes signaux ($S_2$) et sans utiliser les premiers signaux ($S_1$), des troisièmes signaux ($S_3$) représentatifs de la combinaison du champ magnétique additionnel et du champ magnétique induit par ledit champ magnétique additionnel dans le tronçon de canalisation ;
   • e) comparer les premiers signaux ($S_1$) à des premiers seuils prédéterminés ;
   • f) comparer les troisièmes signaux à des deuxièmes seuils prédéterminés ;
   • g) déduire des comparaisons réalisées aux étapes e) et f) l'existence d'au moins un défaut dans le tronçon de canalisation.

2. Procédé selon la revendication 1, dans lequel la direction de polarisation ($P_c$, $P_{c1}$, $P_{c1}$') du premier champ magnétique additionnel ($F_c$, $F_{c1}$, $F_{c1}$') est sensiblement perpendiculaire à l'axe longitudinal (Y) du tronçon de canalisation (T).

3. Procédé selon la revendication 2, dans lequel la direction de polarisation ($P_c$, $P_{c1}$, $P_{c1}$') du premier champ magnétique additionnel ($F_c$, $F_{c1}$, $F_{c1}$') est sensiblement perpendiculaire à celle du champ magnétique ($Ft$) induit par le champ magnétique terrestre dans le tronçon de canalisation (T).

4. Procédé selon l'une quelconque des revendications précédentes, dans lequel le premier courant (I, $I_1$, $I_1$') parcourant la première bobine (C, $C_1$, $C_1$') est alternatif.

5. Procédé selon la revendication 4, dans lequel le premier courant (I, $I_1$, $I_1$') parcourant la première bobine (C, $C_1$, $C_1$') est de forme rectangulaire ou sinusoïdale.

6. Procédé selon l'une quelconque des revendications précédentes, comprenant en outre les étapes suivantes :

   • h) désactiver la première bobine (C, $C_1$, $C_1$') et générer, à l'aide d'une deuxième bobine ($C_2$, $C_2$') parcourue par un deuxième courant ($I_2$, $I_2$') présentant au moins une première valeur non nulle et une deuxième valeur non nulle et différente de la première valeur, un deuxième champ magnétique additionnel ($F_{c2}$, $F_{c2}$') ayant une direction de polarisation ($P_{c2}$, $P_{c2}$') différente de celle ($P_c$, $P_{c1}$, $P_{c1}$') du premier champ magnétique additionnel ($F_c$, $F_{c1}$, $F_{c1}$') et de celle (Pt) du champ magnétique ($Ft$) induit par le champ magnétique terrestre dans le tronçon de canalisation ;
   • i) enregistrer, à l'aide des magnétomètres ($M_1$, $M_2$, $M_3$, $M_4$), des quatrièmes signaux représentatifs d'un troisième champ magnétique combinant le premier champ magnétique ($B_E$), le deuxième champ magnétique additionnel ($F_{c2}$, $F_{c2}$') et un champ magnétique ($F_{i2}$, $F_{i2}$') induit par ledit deuxième champ magnétique additionnel dans le tronçon de canalisation ;
   • j) déterminer, à partir des quatrièmes signaux et sans utiliser les premiers signaux ($S_1$), des cinquièmes signaux représentatifs de la combinaison du deuxième champ magnétique additionnel ($F_{c2}$, $F_{c2}$') et du champ magnétique ($F_{i2}$, $F_{i2}$') induit par ledit deuxième champ magnétique additionnel dans le tronçon de canalisation ;
   • k) comparer les cinquièmes signaux à des troisièmes seuils prédéterminés ;
   • 1) déduire des comparaisons réalisées aux étapes e), f) et k) l'existence du défaut dans le tronçon de canalisation.

7.  Procédé selon la revendication 6, dans lequel la direction de polarisation ($P_{c2}$, $P_{c2}$') du deuxième champ magnétique additionnel ($F_{c2}$, $F_{c2}$') est sensiblement perpendiculaire à l'axe longitudinal (Y) du tronçon de canalisation (T).

8.  Procédé selon la revendication 7, dans lequel la direction de polarisation ($P_{c2}$) du deuxième champ magnétique additionnel ($F_{c2}$) est sensiblement perpendiculaire à la direction de polarisation ($P_{c1}$) du premier champ magnétique additionnel ($F_{c1}$).

9.  Dispositif pour la mise en œuvre du procédé selon l'une quelconque des revendications 1 à 5, comprenant un châssis sur lequel sont montés les magnétomètres ($M_1$, $M_2$, $M_3$, $M_4$) et la première bobine (C, $C_1$), les magnétomètres étant reliés à une unité d'enregistrement et de traitement agencée pour réaliser les étapes a), c), d), e), f) et g), un générateur de courant (G) alternatif relié à la première bobine (C, $C_1$) pour générer le premier courant (I, $I_1$), et des moyens d'orientation d'un axe d'enroulement (W, $W_1$, $W_1$') de la première bobine.

10. Dispositif selon la revendication 9 pour la mise en œuvre du procédé selon l'une quelconque des revendications 6 à 8, dans lequel la deuxième bobine ($C_2$, $C_2$') est montée sur la châssis, l'unité d'enregistrement et de traitement est agencée pour réaliser en outre les étapes i), j), k) et l), et le générateur de courant (G) alternatif est en outre relié à la deuxième bobine pour générer le deuxième courant ($I_2$), le dispositif comprenant en outre des moyens d'orientation d'un axe d'enroulement ($W_2$, $W_2$') de la deuxième bobine.

11. Dispositif selon la revendication 9 ou 10, dans lequel les magnétomètres sont des magnétomètres triaxiaux à vannes de flux.

**Patentansprüche**

1.  Verfahren zur Inspektion eines Abschnitts einer Rohrleitung (T) aus ferromagnetischem Material, das sich entlang einer Längsachse (Y) unter einer Bodenoberfläche ($S_{Boden}$) erstreckt, wobei das Verfahren die folgenden Schritte umfasst:

    • a) mit Hilfe von Magnetometern ($M_1$, $M_2$, $M_3$, $M_4$), die über der Erdoberfläche und dem Rohrleitungsabschnitt angeordnet sind, ersten Signale ($S_1$) aufzuzeichnen, die für ein erstes Magnetfeld ($B_E$) repräsentativ sind, das das Erdmagnetfeld und ein durch das Erdmagnetfeld in dem Rohrleitungsabschnitt induziertes Magnetfeld ($F_t$) kombiniert, wobei die Magnetometer entlang einer Achse ausgerichtet sind, die im Wesentlichen orthogonal zur Längsachse des Rohrleitungsabschnitts ist, und im Wesentlichen parallel zur Bodenoberfläche;
    • b) mittels einer ersten Spule (C, $C_1$, $C_1$'), die von einem ersten Strom (I, $I_1$, $I_1$') durchflossen wird, der mindestens einen ersten Wert ($I_{min}$, $I_{v1}$) hat, der ungleich Null ist, und einen zweiten Wert ($I_{max}$, $I_{v2}$), der ungleich Null ist und sich von dem ersten Wert unterscheidet, ein erstes zusätzliches Magnetfeld ($F_c$, $F_{c1}$, $F_{c1}$') mit einer Polarisationsrichtung ($P_c$, $P_{c1}$, $P_{c1}$') anders als das (Pt) des Magnetfeldes (Ft), das durch das Erdmagnetfeld im Rohrabschnitt induziert wird;
    • c) mit Hilfe der Magnetometer zweite Signale ($S_2$) aufzeichnen, die für ein zweites Magnetfeld (B) repräsentativ sind, das das erste Magnetfeld ($B_E$), das erste zusätzliche Magnetfeld ($F_c$, $F_{c1}$, $F_{c1}$') und ein durch das erste zusätzliches Magnetfeld im Rohrabschnitt induziertes Magnetfeld ($F_i$, $F_{i1}$, $F_{i1}$') kombiniert;
    • d) aus den zweiten Signalen ($S_2$) ohne Verwendung der ersten Signale ($S_1$) ritten Signale ($S_3$) bestimmen, die für die Kombination des zusätzlichen Magnetfeldes und des durch das zusätzliche Magnetfeld induzierten Magnetfeldes in dem Abschnitt der Rohrleitung repräsentativ sind;
    • e) die ersten Signale ($S_1$) mit ersten vorgegebenen Schwellenwerten vergleichen;
    • f) Vergleich dritter Signale mit zweiten vorgegebenen Schwellenwerten;
    • g) Aus den Vergleichen in den Schritten e) und f) ist zu schließen, dass mindestens ein Defekt im Rohrabschnitt vorliegt.

2.  Verfahren nach Anspruch 1, wobei die Polarisationsrichtung ($P_c$, $P_{c1}$, $P_{c1}$') des ersten zusätzlichen Magnetfeldes ($F_c$, $F_{c1}$, $F_{c1}$') im Wesentlichen senkrecht zur Längsachse (Y) des Rohrleitungsabschnitts (T) verläuft.

3.  Verfahren nach Anspruch 2, wobei die Polarisationsrichtung ($P_c$, $P_{c1}$, $P_{c1}$') des ersten zusätzlichen Magnetfeldes ($F_c$, $F_{c1}$, $F_{c1}$') im Wesentlichen senkrecht zu der des Magnetfeldes (Ft) steht, das durch das Erdmagnetfeld im Rohrleitungsabschnitt (T) induziert wird.

4.  Verfahren nach einem der vorhergehenden Ansprüche, wobei der erste Strom (I, $I_1$, $I_1$'), der durch die erste Spule (C,

$C_1$, $C_1$') fließt, ein Wechselstrom ist.

5. Verfahren nach Anspruch 4, wobei der erste Strom (I, $I_1$, $I_1$'), der durch die erste Spule (C, $C_1$, $C_1$') fließt, rechteckig oder sinusförmig ist.

6. Verfahren nach einem der vorhergehenden Ansprüche, das ferner die folgenden Schritte umfasst:

• h) die erste Spule (C, $C_1$, $C_1$') deaktivieren und mittels einer zweiten Spule ($C_2$, $C_2$'), die von einem zweiten Strom ($I_2$, $I_2$') durchflossen wird, der mindestens einen ersten Wert ungleich Null und einen zweiten Wert ungleich Null aufweist und sich von dem ersten Wert unterscheidet, ein zweites zusätzliches Magnetfeld ($F_{c2}$, $F_{c2}$') erzeugen, das eine Polarisationsrichtung ($P_{c2}$) $P_{c2}$') hat, von dem ($P_c$, $P_{c1}$, $P_{c1}$') des ersten zusätzlichen Magnetfeldes ($F_c$, $F_{c1}$, $F_{c1}$') und dem (Pt) des durch das Erdmagnetfeld im Rohrabschnitt induzierten Magnetfeldes (Ft) unterscheidet;
• i) mit Magnetometern ($M_1$, $M_2$, $M_3$, $M_4$) vierte Signale aufzeichnen, die für ein drittes Magnetfeld repräsentativ sind, das das erste Magnetfeld ($B_E$), das zweite zusätzliche Magnetfeld ($F_{c2}$, $F_{c2}$') und ein durch das zweite zusätzliche Magnetfeld im Rohrabschnitt induziertes Magnetfeld ($F_{i2}$, $F_{i2}$') kombiniert;
• j) aus dem vierten Signal und ohne Verwendung der ersten Signale ($S_1$) fünfte Signale zu bestimmen, die für die Kombination des zweiten zusätzlichen Magnetfeldes ($F_{c2}$, $F_{c2}$') und des Magnetfeldes ($F_{i2}$, $F_{i2}$') repräsentativ sind, das durch das zweite zusätzliche Magnetfeld im Rohrleitungsabschnitt induziert wird;
• k) Vergleich der fünften Signale mit dritten vorgegebenen Schwellenwerten;
• l) Aus den in den Schritten e), f) und k) angestellten Vergleichen ist abzuleiten, dass der Defekt im Rohrabschnitt vorhanden ist.

7. Verfahren nach Anspruch 6, wobei die Polarisationsrichtung ($P_{c2}$, $P_{c2}$') des zweiten zusätzlichen Magnetfeldes ($F_{c2}$, $F_{c2}$') im Wesentlichen senkrecht zur Längsachse (Y) des Rohrabschnitts (T) verläuft.

8. Verfahren nach Anspruch 7, wobei die Polarisationsrichtung ($P_{c2}$) des zweiten zusätzlichen Magnetfeldes ($F_{c2}$) im Wesentlichen senkrecht zur Polarisationsrichtung ($P_{c1}$) des ersten zusätzlichen Magnetfeldes ($F_{c1}$) verläuft.

9. Vorrichtung zur Durchführung des Verfahrens nach einem der Ansprüche 1 bis 5, umfassend ein Fahrgestell, auf dem die Magnetometer ($M_1$, $M_2$, $M_3$, $M_4$) und die erste Spule (C, $C_1$) montiert sind, wobei die Magnetometer mit einer Aufzeichnungs- und Verarbeitungseinheit verbunden sind, die zur Ausführung der Schritte a), c), d), e), f) und g) angeordnet ist, einen Wechselstromgenerator (G), der mit der ersten Spule (C, $C_1$) verbunden ist, um den ersten Strom (I, $I_1$) zu erzeugen, und ein Mittel zum Ausrichten einer Wicklungsachse (W, $W_1$, $W_1$') der ersten Spule.

10. Vorrichtung nach Anspruch 9 zum Ausführen des Verfahrens nach einem der Ansprüche 6 bis 8, wobei die zweite Spule ($C_2$, $C_2$') auf dem Fahrgestell montiert ist, die Aufzeichnungs- und Verarbeitungseinheit ferner angeordnet ist, um die Schritte i), j), k) und l) auszuführen, und der Wechselstromgenerator (G) ferner mit der zweiten Spule zur Erzeugung des zweiten Stroms ($I_2$) verbunden ist, die Vorrichtung umfasst auch Mittel zum Ausrichten einer Wicklungsachse ($W_2$, $W_2$') der zweiten Spule.

11. Vorrichtung nach einem der Ansprüche 9 und 10, wobei die Magnetometer triaxiale Flussgatter (Fluxgate) Magnetometer sind.

## Claims

1. A method for inspecting a section of pipeline (T) made of ferromagnetic material extending below a soil surface ($S_{soil}$) along a longitudinal axis (Y), the method comprising the following steps:

• a) record, by means of magnetometers ($M_1$, $M_2$, $M_3$, $M_4$) arranged above the ground surface and the section of pipeline, first signals ($S_1$) representative of a first magnetic field ($B_E$) combining the Earth's magnetic field and a magnetic field (Ft) induced by the Earth's magnetic field in the section of pipeline, the magnetometers being aligned along an axis substantially orthogonal to the longitudinal axis of the section of pipeline, and substantially parallel to the surface of the ground;
• b) generate, by means of a first coil (C, $C_1$, $C_1$') carrying a first current (I, $I_1$, $I_1$') having at least a first value ($I_{min}$, $I_{v1}$) that is non-zero and a second value ($I_{max}$, $I_{v2}$) that is non-zero and different from the first value, a first additional magnetic field ($F_c$, $F_{c1}$, $F_{c1}$') having a direction of polarization ($P_c$, $P_{c1}$, $P_{c1}$') different from that (Pt) of the magnetic field (Ft) induced by the Earth's magnetic field in the pipeline section of pipeline;
- c) record, using the magnetometers, second signals $(S_2)$ representative of a second magnetic field (B) combining the first magnetic field $(B_E)$, the first additional magnetic field $(F_c, F_{c1}, F_{c1}')$ and a magnetic field $(F_i, F_{i1}, F_{i1}')$ induced by said first additional magnetic field in the section of pipeline;
- d) determine, from the second signals $(S_2)$ and without using the first signals $(S_1)$, third signals $(S_3)$ representative of the combination of the additional magnetic field and the magnetic field induced by the said additional magnetic field in the section of pipeline;
- e) compare the first signals $(S_1)$ to first predetermined thresholds;
- f) compare third signals to second predetermined thresholds;
- g) Infer from the comparisons made in steps e) and f) that there is at least one defect in the section of pipeline.

2. The method according to claim 1, wherein the polarization direction $(P_c, P_{c1}, P_{c1}')$ of the first additional magnetic field $(F_c, F_{c1}, F_{c1}')$ is substantially perpendicular to the longitudinal axis (Y) of the section of pipeline (T).

3. The method according to claim 2, wherein the polarization direction $(P_c, P_{c1}, P_{c1}')$ of the first additional magnetic field $(F_c, F_{c1}, F_{c1}')$ is substantially perpendicular to that of the magnetic field (Ft) induced by the Earth's magnetic field in the section of pipeline (T).

4. The method according to any one of the preceding claims, wherein the first current $(I, I_1, I_1')$ flowing through the first coil $(C, C_1, C_1')$ is an alternating current.

5. The method according to claim 4, wherein the first current $(I, I_1, I_1')$ flowing through the first coil $(C, C_1, C_1')$ is rectangular or sinusoidal in shape.

6. The method according to any one of the preceding claims, further comprising the following steps:

- h) deactivate the first coil $(C, C_1, C_1')$ and generate, by means of a second coil $(C_2, C_2')$ carrying a second current $(I_2, I_2')$ having at least a first non-zero value and a second non-zero value and differing from the first value, a second additional magnetic field $(F_{c2}, F_{c2}')$ having a direction of polarization $(P_{c2}), P_{c2}')$ different from that $(P_c, P_{c1}, P_{c1}')$ of the first additional magnetic field $(F_c, F_{c1}, F_{c1}')$ and that (Pt) of the magnetic field (Ft) induced by the Earth's magnetic field in the section of pipeline;
- i) record, using magnetometers $(M_1, M_2, M_3, M_4)$, fourth signals representative of a third magnetic field combining the first magnetic field $(B_E)$, the second additional magnetic field $(F_{c2}, F_{c2}')$ and a magnetic field $(F_{i2}, F_{i2}')$ induced by said second additional magnetic field in the section of pipeline;
- j) determine, from the fourth signals and without using the first signals $(S_1)$, fifth signals representative of the combination of the second additional magnetic field $(F_{c2}, F_{c2}')$ and the magnetic field $(F_{i2}, F_{i2}')$ induced by said second additional magnetic field in the section of pipeline;
- k) compare the fifth signals to third predetermined thresholds;
- 1) Infer from the comparisons made in steps e), f) and k) the existence of the defect in the section of pipeline.

7. The method according to claim 6, wherein the polarization direction $(P_{c2}, P_{c2}')$ of the second additional magnetic field $(F_{c2}, F_{c2}')$ is substantially perpendicular to the longitudinal axis (Y) of the section of pipeline (T) .

8. The method according to claim 7, wherein the polarization direction $(P_{c2})$ of the second additional magnetic field $(F_{c2})$ is substantially perpendicular to the polarization direction $(P_{c1})$ of the first additional magnetic field $(F_{c1})$.

9. An apparatus for carrying out the method according to any one of claims 1 to 5, comprising a chassis on which the magnetometers $(M_1, M_2, M_3, M_4)$ and the first coil $(C, C_1)$ are mounted, the magnetometers being connected to a recording and processing unit arranged to perform steps a), c), d), e), f) and g), an alternating current generator (G) connected to the first coil $(C, C_1)$ to generate the first current $(I, I_1)$, and means of orienting a winding axis $(W, W_1, W_1')$ of the first coil.

10. The apparatus according to claim 9 for carrying out the method according to any one of claims 6 to 8, wherein the second coil $(C_2, C_2')$ is mounted on the chassis, the recording and processing unit is further arranged to perform steps i), j), k) and l), and the alternating current generator (G) is further connected to the second coil for generating the second current $(I_2)$, the apparatus also comprising means of orienting a winding axis $(W_2, W_2')$ of the second coil.

11. The apparatus according to claim 9 or 10, wherein the magnetometers are triaxial fluxgate magnetometers.

Fig. 1A

Fig. 1B

EP 4 300 092 B1

**Fig. 2A**

**Fig. 2B**

Disposer les magnétomètres $M_1$, $M_2$, $M_3$, et $M_4$ au-dessus du tronçon de canalisation T

Enregistrer via les magnétomètres $M_1$, $M_2$, $M_3$, et $M_4$ les premiers signaux $S_1$

Activer la bobine C via un courant alternatif I

Enregistrer via les magnétomètres $M_1$, $M_2$, $M_3$, et $M_4$ les deuxièmes signaux $S_2$

Déduire des premiers et deuxièmes signaux $S_1$ et $S_2$ la présence d'un défaut dans le tronçon de canalisation T

**Fig. 3**

Fig. 4A

Fig. 4B

**Fig. 5A**

**Fig. 5B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019083923 A1